# EUROPEAN PATENT APPLICATION

(11) **EP 4 790 652 A1**
(43) Date of publication of application: **12.08.2026**
(21) Application number: 26153122.2
(22) Date of filing: 21.01.2026
(51) Int. Cl.: G06V 10/25, G06V 10/44, G06V 10/764, G06V 10/80, G06V 10/82, G06V 20/58, G06V 20/56, G06V 10/426

(54) **METHOD AND APPARATUS FOR DETERMINING TRAFFIC TOPOLOGICAL RELATIONSHIPS**

(30) Priority: 05.02.2025 CN 202510130526
(71) Applicant: Robert Bosch GmbH, 70442 Stuttgart (DE)
(72) Inventor: LI, Xinrun, Shanghai, 200335 (CN); WANG, Wenfu, Shanghai, 200335 (CN); WANG, Leichen, Shanghai, 200335 (CN); ZHANG, Zongzheng, Shanghai, 200335 (CN)

(57) **Abstract**

The present application relates to a method for determining traffic topological relationships, comprising: detecting a plurality of traffic elements based on a traffic image; and determining a first topological relationship result based on a first set of traffic elements among the detected plurality of traffic elements through a fast system, wherein the first topological relationship result represents a topological relationship among the first set of traffic elements; determining a second topological relationship result based on a second set of traffic elements among the detected plurality of traffic elements through a slow system, wherein the second topological relationship result represents a topological relationship among the second set of traffic elements, and wherein a combination of the first topological relationship result and the second topological relationship result represents a traffic topological relationship among the plurality of traffic elements.

## Description

### Technical Field

The present application relates to the field of autonomous driving, and more specifically, to a method and an apparatus for determining traffic topological relationships.

### Background

When the vehicle is operating in an autonomous driving mode, it may be necessary to determine traffic topological relationships between traffic elements in the vehicle environment (for example, traffic signs and lane segments) in order to make subsequent driving decisions (for example, determining whether the vehicle can turn left into a specific lane).

Complex reasoning may be required when the vehicle determines the traffic topological relationships. For example, a visual language model (VLM) may be used to perform visual question answering (VQA) based on traffic images collected by the vehicle. However, the traffic images may contain a large number of traffic elements, and using VQA to determine the topological relationships between these traffic elements may require an excessively large set of visual question answering (VQA) queries. For example, if a traffic image contains 100 lane segments and 20 traffic signs, determining the relationship between any two lane segments may require 100 × 100 = 10,000 queries to the VLM, and determining the relationship between each lane segment and each traffic sign may require 100 × 20 = 2,000 queries to the VLM. This is not only expensive in terms of computational cost and resource consumption, but also disadvantageous for real-time autonomous driving applications due to the resulting latency.

Therefore, there is a need for an improved method and apparatus for determining traffic topological relationships, which can determine traffic topological relationships with higher accuracy and lower latency, while reducing computational cost and resource consumption, particularly when the traffic images involve more complex traffic conditions.

### Summary of the Invention

The following introduction is provided in order to introduce selected concepts in a simple manner, and these concepts will be further described in the detailed description below. The introduction is not intended to highlight the key or necessary features of the claimed subject matter, nor is it intended to limit the scope of the claimed subject matter.

In response to the above problems, the present application provides a novel computer-implemented method for determining traffic topological relationships. By adopting the methods of various embodiments of the present application, the traffic topological relationships can be determined with lower latency, and less computational cost and resource consumption, and with higher accuracy, thereby improving the efficiency of autonomous driving applications.

According to one aspect of the present application, a method for determining traffic topological relationships is provided, comprising: detecting a plurality of traffic elements based on a traffic image; and determining a first topological relationship result based on a first set of traffic elements among the detected plurality of traffic elements through a fast system, wherein the first topological relationship result represents a topological relationship between the first set of traffic elements; determining a second topological relationship result based on a second set of traffic elements among the detected plurality of traffic elements through a slow system, wherein the second topological relationship result represents a topological relationship between the second set of traffic elements, and wherein a combination of the first topological relationship result and the second topological relationship result represents a traffic topological relationship between the plurality of traffic elements.

According to one aspect of the present application, an apparatus for determining traffic topological relationships is provided, comprising: a detection module that detects a plurality of traffic elements based on a traffic image; a fast system that determines a first topological relationship result based on a first set of traffic elements among the detected plurality of traffic elements, wherein the first topological relationship result represents a topological relationship between the first set of traffic elements; and a slow system that determines a second topological relationship result based on a second set of traffic elements among the detected plurality of traffic elements, wherein the second topological relationship result represents a topological relationship between the second set of traffic elements, and wherein a combination of the first topological relationship result and the second topological relationship result represents a traffic topological relationship between the plurality of traffic elements.

According to one aspect of the present application, a processing apparatus is provided, comprising: one or more processors; and one or more memories, the memories having computer-executable instructions stored thereon, and the instructions, when run by the one or more processors, perform operations for determining traffic topological relationships according to the embodiments of the present application.

According one aspect of the present disclosure, a machine-readable storage medium is provided, executable instructions are stored on the machine-readable storage medium, and the instructions, when executed, cause one or more processors to perform operations for determining traffic topological relationships according to the embodiments of the present application.

According to one aspect of the present application, a computer program product is provided, which comprises executable instructions that, when executed, cause one or more processors to perform operations for determining traffic topological relationships according to the embodiments of the present application.

According to various aspects of the present disclosure, the technical solution provided by the present disclosure for determining a traffic topological relationship comprises a fast system and a slow system, wherein the fast system can quickly determine the topological relationship between some traffic elements in the traffic image, and the slow system can accurately determine the remaining topological relationships that are not determined by the fast system. By using this technical means, while ensuring that the traffic topological relationship determination process involves lower latency, and less cost and resource consumption, it can also ensure the accuracy of the determined topological relationship results. Other advantages of various aspects of the disclosure will be described below.

### Brief Description of the Drawings

The nature and advantages of the content of the present application may be further implemented by referring to the following accompanying drawings. In the drawings, similar components or features may have the same reference signs.
FIG. 1 is a block diagram of an apparatus for determining traffic topological relationships according to one embodiment.
FIG. 2 is a schematic diagram of a fast system and traffic topology identification code generation according to one embodiment.
FIGS. 3A-3B are schematic diagrams of slow systems according to different embodiments.
FIG. 3C shows image prompts associated with a VQA module according to different embodiments.
FIG. 4 are schematic diagrams representing lane segment-traffic sign relationships according to different embodiments.
FIG. 5 is a flowchart of a method for determining traffic topological relationships according to one embodiment.
FIG. 6 is a block diagram of an apparatus for determining traffic topological relationships according to one embodiment.
FIG. 7 is a block diagram of a processing apparatus according to one embodiment.

### Detailed Description of the Embodiments

The subject matter described herein will now be discussed with reference to exemplary embodiments. It should be understood that discussions about these embodiments are provided to aid those skilled in the art in better understanding and thereby implementing the subject matter described herein rather than limiting the scope of protection, applicability, or examples described in the Claims. Changes may be made to the functions and arrangements of the elements discussed without departing from the scope of protection of the content of the present application. Various processes or components may be omitted, substituted, or added in the various examples as needed. For example, the described method may be performed in a different order than that described, and various steps may be added, omitted, or combined. In addition, features described in relation to some examples may also be combined in other examples.

As used herein, the term "comprise" and its variations are open terms, which mean "including but not limited to." The term "based on" indicates "at least partially based on." The terms "one embodiment" and "an embodiment" indicate "at least one embodiment." The term "another embodiment" indicates "at least one other embodiment." The terms "first," "second," etc. may refer to different or same objects. Other definitions, whether explicit or implied, may be included below. Unless explicitly stated in the context, the definition of one term is consistent throughout the Description.

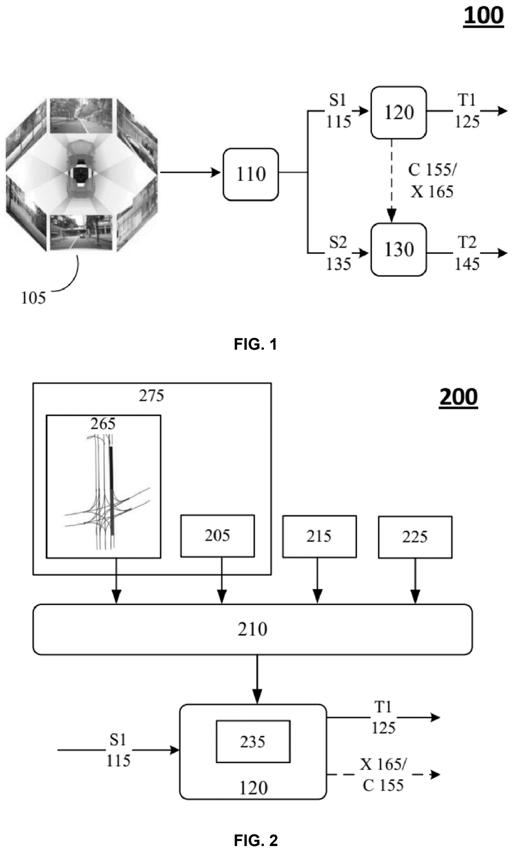

FIG. 1 is a block diagram of an apparatus 100 for determining traffic topological relationships according to one embodiment. The apparatus 100 comprises a detection module 110, a fast system 120, and a slow system 130. It will be appreciated that the apparatus 100 may comprise other modules; FIG. 1 only shows modules relevant to the present embodiment.

In one example, the detection module 110, fast system 120, and slow system 130 in the apparatus 100 may be deployed in a vehicle. For example, the vehicle may have autonomous driving capabilities and may determine traffic topological relationships, for example, in a map-less scenario, to perform autonomous driving. In another example, the detection module 110 may be deployed in a vehicle, and the fast system 120 and slow system 130 may be deployed in the vehicle or a server, wherein the vehicle and the server may communicate to exchange data. In yet another example, some or all of the detection module 110 may also be deployed in a server.

The detection module 110 may obtain a traffic image 105 as input. For example, the traffic image 105 may comprise a multi-view image acquired from an image sensor on the vehicle, which comprises a plurality of traffic elements in the environment in which the vehicle is located. Various types of traffic elements may exist. For example, a first-type traffic element may comprise lane segments, and a second-type traffic element may comprise traffic signs (e.g., traffic lights, traffic signs, or road markings). It can be understood that although the multi-view image 105 is shown in FIG. 1 as a plurality of (e.g., six illustrated) images containing a panoramic view of the vehicle's surroundings, the input image 105 to the detection module 110 may also be one or more images corresponding to partial angles around the vehicle, such as one or more images located in front of the vehicle as shown in FIG. 1.

The detection module 110 may detect a plurality of traffic elements based on the traffic image 105. The detected plurality of traffic elements may comprise at least one type of traffic element. For example, the detected plurality of traffic elements comprise at least one type of first-type traffic element and second-type traffic element. The detection module 110 may be implemented using an image fusion algorithm, an image recognition algorithm, a neural network model, or any combination thereof. For example, the detection module 110 may comprise a first visual model (e.g., a lane segment visual model) for detecting lane segments in the traffic image 105, and a second visual model (e.g., a traffic sign visual model) for detecting traffic signs in the traffic image 105. The first visual model identifies lane segments based on the traffic image 105. Each identified lane segment may be represented in an appropriate manner. For example, a lane segment may be represented by the coordinates of its vertices. For example, data representing a lane segment may also comprise attribute indicators indicating lane segment attributes, and optionally, index values. The second visual model identifies traffic signs based on the traffic image 105. Each identified traffic sign may be represented in an appropriate manner. For example, data representing a traffic sign may comprise the coordinates of the vertices of the bounding box corresponding to the traffic sign, attribute indicators indicating the attributes of the traffic sign, and optional index values.

The fast system 120 may determine a first topological relationship result T1 125 based on a first set of traffic elements S1 115 from a plurality of traffic elements detected by the detection module 110. The fast system 120 may be implemented using traffic topology identification code. For example, the fast system 120 may execute this traffic topology identification code to determine the relationship between each pair of traffic elements in the first set of traffic elements S1 115 among the detected plurality of traffic elements, thereby obtaining the first topological relationship result T1 125. The slow system 130 may determine a second topological relationship result T2 145 based on a second set of traffic elements S2 135 from the detected plurality of traffic elements. The slow system 130 may be implemented through a visual question-answering (VQA) task based on a first visual language model (VLM). For example, the slow system 130 may perform VQA based on a second set of traffic elements S2 135 using the VLM to determine the second topological relationship result T2 145 between the second set of traffic elements S2 135 among the detected plurality of traffic elements. Compared to the dense question-answering approach of VQA using the VLM to determine traffic topological relationships, determining the traffic topological relationships by executing the traffic topology identification code in the fast system 120 can have less latency and consume less computational cost and resources. On the other hand, compared to determining the traffic topological relationships by executing the traffic topology identification code, determining the traffic topological relationships by performing VQA using the VLM in the slow system 130 can handle more complex situations and has higher accuracy. Therefore, by combining the fast system 120 and the slow system 130, real-time performance, computational efficiency, and recognition accuracy can be balanced in the process of determining traffic topological relationships.

Traffic elements may have attribute indicators. In one example, an attribute indicator may indicate whether a traffic element is a first-type or second-type traffic element. In another example, an attribute indicator may indicate whether the traffic element is a simple traffic element (e.g., one that may be processed by a fast system) or a complex traffic element (e.g., one that requires processing by a slow system). In one example, a lane segment type of traffic element may have a corresponding attribute indicator for indicating a straight lane, a turning lane, or a U-turn lane, etc. Additionally or alternatively, a lane segment type of traffic element may also have an attribute indicator associated with the curvature, length, or width of the lane segment. In another example, for traffic sign types of traffic elements, different traffic sign traffic elements may have corresponding attribute indicators for indicating the meaning of the traffic signs (e.g., left turn, traffic light, no parking, etc.). Additionally or alternatively, a traffic sign type of traffic element may also have an attribute indicator for indicating whether the traffic sign contains text. It can be understood that attribute indicators for indicating any attribute of a traffic element may also be comprised.

According to predefined rules, traffic elements with specific attribute indicators may be grouped into a second set of traffic elements S2 135, and traffic elements with the remaining attribute indicators may be grouped into a first set of traffic elements S1 115. Although not shown in FIG. 1, the apparatus 100 may also comprise a grouping module for grouping the detected traffic elements into the first set of traffic elements S1 115 and the second set of traffic elements S2 135.

In the first example, specific attribute indicators may comprise attribute indicators indicating second-type traffic elements, and the remaining attribute indicators may comprise attribute indicators indicating first-type traffic elements. In this example, the first-type traffic elements (e.g., lane segments) detected by the detection module 110 are used as the first set of traffic elements S1 115, and the first-type traffic elements and the second-type traffic elements (e.g., traffic signs) detected by the detection module 110 are used as the second set of traffic elements S2 135. Correspondingly, the fast system 120 processes the first set of traffic elements S1 115 to obtain a first topological relationship result T1 125, which comprises a first relationship between each pair of lane segment-lane segment, and the slow system 130 processes the second set of traffic elements S2 135 to obtain a second topological relationship result T2 145, which comprises a second relationship between each pair of lane segment-traffic sign. For example, the first relationship between lane segments may be a drivability relationship between any two lane segments in a plurality of lane segments. For example, the first set of traffic elements S1 115 may comprise *n* lane segments, and the first topological relationship result T1 125 determined by the fast system 120 may comprise a lane segment-lane segment matrix of size *n* × *n*. For example, this lane segment-lane segment matrix may be ${\left(\begin{matrix}0 & 1 & ⋯ & 0 \\ ⋮ & ⋮ & ⋱ & ⋮ \\ 1 & 0 & ⋯ & 0\end{matrix}\right)}_{n \times n}$, where the element A*ij*=1 in the matrix indicates that lane segment *j* can be entered from lane segment *i*, and the element *Aᵢⱼ*=0 indicates that lane segment *j* cannot be entered from lane segment *i*. For example, the second relationship between a lane segment and a traffic sign may indicate whether there is a corresponding relationship between a lane segment and a traffic sign (e.g., whether a lane segment is affected or constrained by a traffic sign). For example, for *n* lane segments and *k* traffic signs in the second set of traffic elements S2 135, the second topological relationship result T2 145 determined by the slow system 130 may comprise a lane segment-traffic sign matrix of size *n* × *k*. For example, the lane segment-traffic sign matrix may be ${\left(\begin{matrix}1 & 1 & ⋯ & 0 \\ ⋮ & ⋮ & ⋱ & ⋮ \\ 0 & 1 & ⋯ & 0\end{matrix}\right)}_{n \times k}$, where the element *Aᵢⱼ*=1 indicates that the *i*-th lane segment corresponds to the *j*-th traffic sign (e.g., the *i*-th lane segment is affected or constrained by the *j*-th traffic sign), and the element *Aᵢⱼ*=0 indicates that the i-th lane segment does not correspond to the *j*-th traffic sign (e.g., the *i*-th lane segment is not affected or constrained by the *j*-th traffic sign). It is understood that the first topological relationship result T1 125 and the second topological relationship result T2 145 do not necessarily need to be represented in matrix form; any suitable form can be used as long as it can represent the corresponding lane segment-lane segment relationship and lane segment-traffic sign relationship.

In the second embodiment, specific attribute indicators may comprise attribute indicators indicating that the traffic sign has text, or specific attribute indicators may comprise attribute indicators indicating that the traffic sign has a specific meaning (e.g., a tidal flow lane sign). Accordingly, in addition to comprising a plurality of lane segments, the first set of traffic elements S1 115 may also comprise at least one traffic sign (e.g., the at least one traffic sign may be a traffic sign without text, etc.). For example, the grouping module may classify traffic signs with specific attributes into the first set of traffic elements S1 115 based on the attribute indicators of the traffic signs. The topological relationship identification code in the fast system 120 may accurately determine the relationship between the specific type of traffic sign and the lane segment through logical rule operations. For example, the specific type of traffic sign may be a directional arrow drawn on the lane (e.g., a straight arrow, a left turn arrow, etc.). The topological relationship identification code in the fast system 120 may accurately determine whether there is a constraint relationship between the lane segment and the directional arrow based on the position of the lane segment and the position of the directional arrow. The grouping rules of the grouping module may be pre-configured based on the processing capability of the fast system 120. For example, if the fast system 120 can accurately determine the relationship between one or more types of traffic signs and lane segments, the grouping rules of the grouping module will be configured to group the one or more types of traffic signs into the first set of traffic elements, and group other types of traffic signs into the second set of traffic elements.

Accordingly, the fast system 120 determines a first relationship between lane segments in the first set of traffic elements S1 115 and a second relationship between lane segments and traffic signs in the first set of traffic elements, while the slow system 130 determines a second relationship between lane segments and traffic signs in the second set of traffic elements S2 135. In other words, in this embodiment, the first topological relationship result T1 125 may comprise: a first relationship T11 between a plurality of lane segments in the first set of traffic elements, and a second relationship T12 between a plurality of lane segments and traffic signs (e.g., m out of k detected traffic signs); the second topological relationship result T2 145 may comprise: a second relationship T2 between a plurality of lane segments and traffic signs (e.g., *k-m* out of *k* detected traffic signs) in the second set of traffic elements.

The combination of the second relationship T12 in the first topological relationship result T1 125 and the second relationship T2 in the second topological relationship result T2 145 constitutes the identified lane segment-lane sign topological relationship, which may be represented as the aforementioned *n* × *k* matrix or any other suitable form. The first relationship T1 in the first topological relationship result T1 125 constitutes the identified lane segment-lane segment topological relationship, which may be represented as the aforementioned *n* × *n* matrix or any other suitable form. Correspondingly, the combination of the first topological relationship result T1 125 and the second topological relationship result T2 145 represents the traffic topological relationship between the detected plurality of traffic elements, which may be represented as the aforementioned *n* × *n* matrix and *n* × *k* matrix, or any other suitable form.

It is understood that the grouping rules of the grouping module are not limited to the specific rules in the first and second embodiments described above, and other similar grouping rules may be adopted in other implementations. For example, specific attribute indicators may comprise attribute indicators indicating a complex traffic element, and the remaining attribute indicators may comprise attribute indicators indicating a simple traffic element. Alternatively or additionally, a specific attribute indicator may comprise: an attribute indicator indicating that a lane segment has a specific curvature, length, or width, or an attribute indicator indicating that a traffic sign has text.

In the third embodiment, the fast system 120 may trigger the slow system 130 to identify the topological relationships between some traffic elements. As shown by the dashed lines in FIG. 1, the fast system 120 may not be certain about the topological relationships between some traffic elements in the first set of traffic elements S1 115, but may determine the topological relationships between those traffic elements by triggering the slow system 130.

In the first example of the third embodiment, all detected traffic elements may be grouped into a first set of traffic elements S1 115 and not into a second set of traffic elements S2 135. In other words, the second set of traffic elements S2 135 is no longer pre-grouped; instead, the fast system 120 triggers the slow system 130 to identify the topological relationships between some traffic elements. For example, some traffic elements in the first set of traffic elements S1 115 may reflect complex traffic, and the fast system 120 may not be able to accurately determine the traffic topological relationships for complex traffic. Alternatively, the fast system 120 may choose to use the slow system 130 to determine the traffic topological relationships for complex traffic to obtain more accurate traffic topological relationship results. For example, complex traffic may comprise situations where: the traffic image 105 comprises at least one traffic sign; the traffic element in the traffic image 105 has an attribute indicator that indicates it is a complex traffic element; or the traffic image 105 comprises a traffic sign with a specific attribute indicator (e.g., a traffic sign that indicates a specific meaning (e.g., a tidal flow lane), or an indicator that the traffic sign has text); or the traffic image 105 comprises a lane segment with a specific attribute indicator (e.g., a turning or U-turn lane segment, a lane segment with a specific curvature, length, or width), and so on. In this example, in response to the inclusion of complex traffic (e.g., the need to determine the topological relationships between traffic signs and lane segments) in the first set of traffic elements S1 115, the fast system 120 may throw an exception X 165 or call the Visual Question Answering (VQA) application programming interface (API) C 155 to generate a second topological relationship result T2 145 by triggering the slow system 130. This result comprises the topological relationships between traffic elements that the fast system 120 has not determined (e.g., the topological relationships between traffic signs and lane segments). In this example, the slow system 130 may determine the topological relationships between these traffic elements more accurately than the fast system 120.

In the second example of the third embodiment, the same or similar grouping rules as those in the first and second embodiments may be used to pre-group the detected traffic elements into a first set of traffic elements S1 115 and a second set of traffic elements S2 135. In this second example, similar to the first example described above, in response to some complex traffic (e.g., the need to determine topological relationships between irregular lane segments and lane segments) or anomalies in the first set of traffic elements S1 115, the fast system 120 may throw an exception X 165 or call the C 155 Visual Question Answering (VQA) application programming interface (API) to trigger the slow system 130 to generate a portion of the second topological relationship result T2 145, wherein at least a portion of the second topological relationship result T2 145 comprises topological relationships between traffic elements not determined by the fast system 120 (e.g., topological relationships between irregular lane segments and lane segments). In this second example, a portion of the second topological relationship result T2 145 is the result of the slow system 130 processing a subset of traffic elements (denoted as S21) triggered by the fast system 120, and another portion is the result of the slow system 130 processing a subset of pre-grouped traffic elements S2 135. Therefore, the set of traffic elements actually processed by the slow system 130 comprises the two portions of traffic elements S21 and S2 mentioned above to obtain the second topological relationship result T2 145. Correspondingly, the first topological relationship result T1 125 is obtained by the traffic topology identification code of the fast system 120 for some or all of the traffic elements in the first set of traffic elements S1 115 through direct calculation (i.e., without calling the VQA). Therefore, the traffic elements actually processed by the fast system 120 comprise the aforementioned some or all of the traffic elements in the first set of traffic elements S1 115. Both the first topological relationship result T1 125 and the second topological relationship result T2 145 may comprise at least one of the relationships between lane segments and the relationship between lane segments and traffic signs.

The main difference between the third embodiment and the first and second embodiments lies in that the fast system 120 in the third embodiment can also trigger the operation of the slow system 130. For example, the traffic topology identification code of the fast system 120 also comprises the function of throwing an exception and/or calling the VQA API. For example, for a pair of traffic elements, if the traffic topology identification code of the fast system 120 throws an exception because it cannot obtain a valid result, the slow system 130 is triggered to process the pair of traffic elements in response to the exception. For example, if the traffic topology identification code of the fast system 120 calls the VQA API for a pair of traffic elements, the slow system 130 is triggered accordingly to process the pair of road traffic elements. For example, for certain predefined types of traffic elements, the traffic topology identification code of the fast system 120 may throw an exception or call the VQA API to trigger the slow system 130 to process these predefined traffic elements.

As described above, the fast system 120 may determine the traffic topological relationship for relatively simple traffic in the traffic image 105. For example, simple traffic may comprise situations where: the traffic image 105 does not contain traffic signs; the traffic image 105 comprises a small number of lane segments and traffic signs; traffic elements in the traffic image 105 have attribute indicators that indicate they are simple traffic elements; traffic signs comprised in the traffic image 105 only show symbols (e.g., traffic light signals, no-parking or left-turn signs, etc.); or the traffic image 105 does not contain turning or U-turn lane segments, etc. Accordingly, the set of traffic elements processed by the fast system 120 (i.e., the first set of traffic elements S1 115 or a portion thereof) may comprise a plurality of first-type traffic elements (e.g., a plurality of lane segments), or may comprise at least one first-type traffic element (e.g., at least one lane segment) and at least one second-type traffic element (e.g., at least one traffic sign). The slow system 130 may be used to determine the traffic topological relationship for complex traffic. In one example, the slow system 130 may determine at least a portion of second topological relationship result T2 145 in response to the following: the detected plurality of traffic elements comprise at least one second-type traffic element (e.g., traffic sign); the first-type traffic element among the detected plurality of traffic elements (e.g., lane segment) is complex (e.g., comprising turning or U-turn lane segments, unclear lane segment divisions, or overlapping or disconnected lane segments, etc.), etc. In another example, the slow system 130 may determine at least a portion of second topological relationship result T2 145 in response to an exception X 165 thrown by the fast system 120 and/or call to the VQA API C 155. Accordingly, the set of traffic elements processed by the slow system 130 (i.e., the second set of traffic elements S2 135 (which may be empty or non-existent, as described in the first example of the third embodiment) and a portion of the traffic elements that may be processed by the slow system 130 triggered by the fast system 140) may comprise a plurality of first-type traffic elements (e.g., a plurality of lane segments), or may comprise at least one first-type traffic element (e.g., at least one lane segment) and at least one second-type traffic element (e.g., at least one traffic sign).

Accordingly, the first topological relationship result T1 125 and the second topological relationship result T2 145 may respectively comprise a first relationship between first-type traffic elements (e.g., lane segments) (e.g., drivability relationship between two lane segments) and/or a second relationship between first-type traffic elements and second-type traffic elements (e.g., traffic signs) (e.g., correspondence between lane segments and traffic signs). The combination of the first topological relationship result T1 125 and the second topological relationship result T2 145 represents the traffic topological relationship between the detected plurality of traffic elements. For example, the combination of the first topological relationship result T1 125 and the second topological relationship result T2 145 can comprehensively reflect various types of traffic topological relationships between all traffic elements in the traffic image 105 for subsequent autonomous driving decisions in autonomous driving applications. For example, the combination of the first topological relationship result T1 125 and the second topological relationship result T2 145 can reflect the traffic topological relationship between some traffic elements in the traffic image 105, which may be traffic elements that are useful for subsequent autonomous driving decisions or that need to be paid attention to.

It can be understood that, in one example, the second set of traffic elements processed by the slow system 130 (i.e., the second set of traffic elements S2 135 and possibly some traffic elements triggered by the fast system 140) comprises traffic elements not comprised in the first set of traffic elements processed by the fast system 120 (i.e., the first set of traffic elements S1 115 or a portion thereof). For example, as described above, for a specific traffic (e.g., a complex traffic), the topological relationship result may be determined by the slow processing system 130 instead of the fast processing system 120. Accordingly, for these traffics, the second set of traffic elements processed by the slow system 130 may comprise traffic elements associated with the complex traffic that are not comprised in the first set of traffic elements processed by the fast system 120. In another example, the second set of traffic elements may be the same as the first set of traffic elements, and both may comprise all detected traffic elements. In this example, when combining the first topological relationship result and the second topological relationship result, the second topological relationship result may be given priority (e.g., the second topological relationship result may be given a higher weight, or the first topological relationship result may be ignored). It is understandable that the first and second topological relationship results can be combined in any suitable way.

FIG. 2 is a schematic diagram 200 of a fast system 120 and traffic topology identification code 235 generation according to one embodiment. The example in FIG. 2 illustrates the fast system 120 and VLM 210. It will be appreciated that the schematic diagram 200 may also comprise other modules. Only the modules relevant to embodiments of this disclosure are shown in FIG. 2.

In the example of FIG. 2, the fast system 120 may comprise traffic topology identification code 235. For example, the fast system 120 may comprise traffic topology identification code 235 and an execution environment for executing traffic topology identification code 235. The traffic topology identification code 235 is pre-generated by VLM 210. In one example, the traffic topology identification code 235 may be pre-generated by VLM 210 based on a prompt associated with a predefined few-sample example 275. In some examples, the few-sample example 275 may provide VLM 210 with examples associated with the position, orientation, and/or correspondence between traffic elements, enabling VLM 210 to better understand different traffic scenarios.

The prompts associated with the few-sample example 275 may comprise a visual prompt 265 and a text prompt 205 associated with the few-sample example. The visual prompt 265 comprises an image associated with the few-sample example 275, and the text prompt 205 comprises data associated with the few-sample example 275, which may comprise the truth value regarding the few-sample example 275. As shown in FIG. 2, for example, the few-sample example 275 may comprise a frontal example of two lane segments connected, and the visual prompt 265 associated with the few-sample example 275 may show the two connected lane segments (shown as a dark lane segment in the upper half and a light lane segment in the lower half, respectively). It can be understood that the dark lane segments and light lane segments shown in the grayscale image of the accompanying figures represent the blue lane segments and green lane segments in the color image, respectively. In the relevant prompts, color terms such as blue and green are commonly used to indicate the corresponding lane segments; therefore, the blue and green appearing in the prompts exemplified herein correspond to the dark and light colors shown in the figures, respectively. The text prompt 205 associated with this few-sample example 275 may comprise the following text: "This is a frontal example of two connected lane segments. The point set of the green lane segment is [(-1.53, -6.39, -0.40), (-1.34, -4.95, -0.35), ...], and the point set of the blue lane segment is [(-0.67, 5.28, -0.32), (-0.72, 7.68, -0.31), ...]. In this example, the blue lane segment is connected to the blue lane segment." By providing visual prompts 265 and text prompts 205 to the VLM 210, the performance of the VLM 210 can be better utilized, resulting in better performance of the generated traffic topology identification code 235.

In some examples, the VLM 210 may be fed prompts associated with a plurality of few-sample examples, which may relate to various traffic topology scenarios. Examples include: a first lane segment located to the left of a second lane segment; a first lane segment located at an intersection; a first lane segment connected to a second lane segment; a first lane segment and a second lane segment traveling in the same direction; a first traffic sign located in a first lane segment, and so on. In some examples, these plurality of few-sample examples may comprise positive and negative sample examples related to the same traffic topology scenario (e.g., a first lane segment located at an intersection; a first lane segment not located at an intersection, etc.). By providing the VLM 210 with prompts for different traffic scenarios or positive and negative sample examples for the same traffic scenario, the VLM 210 can better understand more diverse traffic scenarios, resulting in better performance of the generated traffic topology identification code 235 and a more accurate determination of the relationships between traffic elements.

In some examples, the text prompts used to generate the traffic topology identification code 235 via VLM 210 may also comprise application programming interface (API) prompts 215. For example, API prompts 215 may (e.g., in natural language) define the inputs and outputs of the generated traffic topology identification code 235, and may describe the inputs or outputs of the API. For instance, API prompts 215 may comprise descriptions of the inputs or outputs of APIs used for functions such as: self-localization on lane search or parallel lane search, determining inter-lane distances, determining inter-lane angles, determining the vehicle's lane, determining parallel lanes, and determining the distance between traffic signs and lanes, etc. Furthermore, as mentioned above, the traffic topology identification code 235 may also comprise the throwing of an exception and/or call to the VQA API; accordingly, API prompts 215 may also comprise descriptions of the inputs and outputs of the exception API and/or the VQA API.

In some examples, the traffic topology identification code 235 may also be pre-generated via the VLM 210 based on professional rule prompts 225. Professional rule prompts 225 may be provided to the VLM 210 to incorporate prior knowledge from domain experts and make the generated traffic topology identification code 235 more stable. For example, the professional rule prompts 225 may define: when determining the first relationship between a plurality of first-type traffic elements, enforce certain angle and distance constraints (e.g., logically, the end point of the parent lane should not be too far from the start point of the lane) to satisfy driving geometry constraints.

In some examples, the traffic topology identification code 235 is updated via the VLM 210. For example, the VLM 210 may periodically or irregularly receive at least one of the following: visual prompts 265 and text prompts 205, API prompts 215, or professional rule prompts 225 associated with a few-sample example 275, to update the traffic topology identification code 235. For example, the received few-sample example 275 may better or more comprehensively reflect the traffic scenario, API prompts 215 may describe the inputs/outputs of an updated API, or professional rule prompts 225 may conform to more comprehensive or updated professional knowledge, thus the updated traffic topology identification code 235 may have better performance.

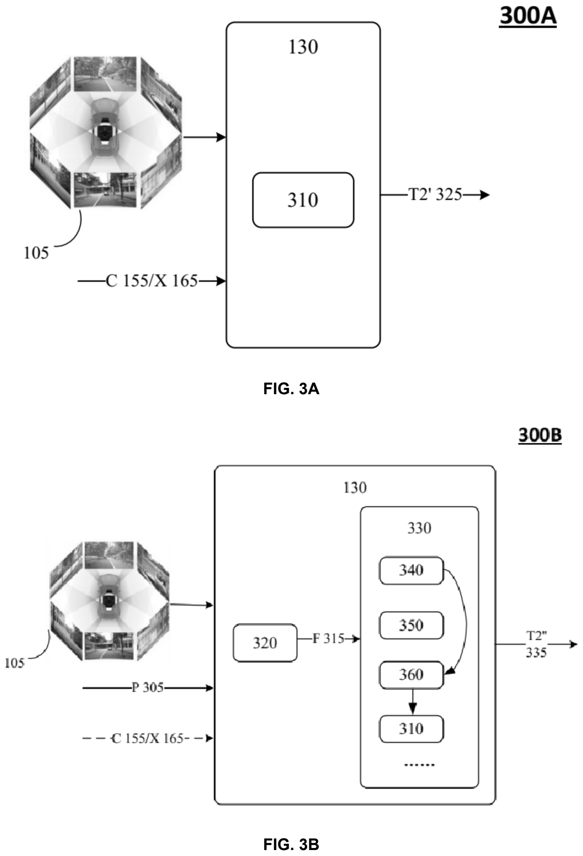

FIG. 3A is a schematic diagram 300A of a slow system 130 according to one embodiment. In the example of FIG. 3A, the slow system 130 comprises a VQA module 310. It will be appreciated that the schematic diagram 300A may also comprise other modules. Only the modules relevant to embodiments of this disclosure are shown in FIG. 3A.

As described above, in response to a traffic topology identification code call to the VQA API C 155 or an exception X 165 thrown, the slow system 130 may determine at least a portion of the second topological relationship result T2' 325. For example, in a traffic scenario involving traffic signs and lane segments, the fast system may not be able to accurately determine the traffic topological relationship between traffic signs and lane segments, and therefore may determine to call the VQA API C 155 or throw an exception X 165. In some examples, the VQA module 310 may be implemented using a VLM.

In the VQA API call C 155 or exception X 165, the indexes or labels of traffic signs and lane segments whose topological relationships need to be determined (e.g., traffic sign A and lane segment B) may be comprised. Accordingly, the VQA module 310 may perform VQA on the traffic image 105 via the VLM based on the indexes or labels of the traffic signs and lane segments. For example, the VQA module 310 may generate the question "In the traffic image, is lane segment B controlled by traffic sign A?" and an input image marked with traffic sign A and lane segment B. It then performs a VQA query on the VLM using this question and the input image, and based on the VQA result from the VLM, "Lane segment B is controlled by traffic sign A," determines a topological relationship result T2' 325, which comprises the topological relationship between traffic sign A and lane segment B. The topological relationship result T2' 325 may be at least a portion of a second topological relationship result T2 145 generated by the slow system 130. The input image marked with traffic sign A and lane segment B may be a perspective image formed by adding markers indicating traffic sign A and lane segment B (e.g., areas with specific colors, bounding boxes, etc.) to the input image 105 as a perspective view or its portion of interest, or a bird's-eye view image formed by adding markers indicating traffic sign A and lane segment B to the corresponding bird's-eye view, or a combination of both. It can be understood that any appropriate method can be used to generate the above-mentioned problem and the input image marked with traffic sign A and lane segment B. It can be understood that for the second set of traffic elements processed by the slow system 130 (i.e., the second set of traffic elements S2 135 and possible partial traffic elements triggered by the fast system 140) described above in conjunction with FIG. 1, the relationship between each pair of traffic elements may be identified by the VQA module 310 in the manner described above.

FIG. 3B is a schematic diagram 300B of a slow system 130 according to one embodiment. In the example of FIG. 3B, the slow system 130 comprises a VLM 320 and a system 330. The system 330 may comprise a plurality of processing submodules, such as a first VQA module 310, a vehicle lane segment determination module 340, a second VQA module 350 (e.g., the second VQA module 350 is used to determine whether a lane is located in an intersection area), a traffic sign distance determination module 360, etc. It will be appreciated that the schematic diagram 300B may also comprise other modules. Only the modules relevant to embodiments of this disclosure are shown in FIG. 3B.

In one example, the slow system 130 may use the VLM 320 to determine at least a portion of the second topological relationship result T2" 335 through reasoning based on a first prompt, based on the traffic image 105 and the first prompt P 305. For example, the first prompt may comprise a Chain of Thought (COT) prompt, a Tree of Thought (TOT) prompt, a Graph of Thought (GOT) prompt, an Algorithm of Thought (AOT) prompt, a Skeleton of Thought (SOT) prompt, or a Story of Thought (SOT) prompt, etc. For example, as described above, in response to the detected traffic being complex (e.g., the detected traffic elements comprise traffic signs), the slow system 130 may be used to determine at least a portion of the second topological relationship result T2" 335. In this example, the first prompt P 305 may be input into the VLM 320 in the slow system 130 so that the VLM 320 may determine at least a portion of the second topological relationship result through reasoning based on the first prompt P 305. For example, in an example where the first prompt P 305 comprise a COT prompt, the first prompt P 305 may comprise the following: "Based on the provided traffic image 105, please generate a processing flow to progressively call the API to determine the correspondence between traffic signs and lane segments in traffic image 105."

Based on the traffic image 105 and the first prompt P 305, the VLM 320 may generate a processing flow F 315 for generating at least a portion of second topological relationship result T2" 335 through reasoning based on the first prompt P 305. As shown in FIG. 3B, the system 330 in the slow system 130 may comprise a plurality of predefined processing submodules, such as a VQA module 310, a vehicle lane segment determination module 340, an intersection location determination module 350, a traffic sign distance determination module 360, etc. The processing flow 315 generated by the VLM 320 may comprise at least one processing submodule from the plurality of pre-configured processing submodules in the system 330, executed sequentially. For example, in an example where the first prompt P 305 comprises a COT prompt, in response to the first prompt P 305, the VLM 320 may generate a processing flow F 315 of sequential calls to the following APIs: the vehicle lane segment determination module 340, the traffic sign distance determination module 360, and the VQA module 310. For example, based on the traffic elements of lane segments contained in the traffic image 105, the vehicle lane segment determination module 340 may determine the lane segment L currently occupied by the vehicle; based on the traffic elements of traffic signs contained in the traffic image 105 and lane segment L, the traffic sign distance determination module 360 may determine the distance x between traffic sign S and lane segment L; based on the distance x, the VQA module 310 may generate the question "In the traffic image, the distance between lane segment L and traffic sign is x. Is lane L controlled by traffic sign S?", and perform a VQA query on the VLM using this question and the input image marked with traffic sign S and lane segment L, and determine whether lane segment L is controlled or constrained by traffic sign S based on the VQA query result.

Alternatively, the processing flow F 315 may also be generated by the VLM 320 based on the exception X 165 thrown by the fast processing system 120, or the call C 155 to the VQA API. For example, the exception X 165 or call C 155 may comprise a question that needs to be determined by the slow processing system 130 (e.g., "Does traffic sign A control lane segment B?"). Based on the call C 155 or exception X 165, the processing flow F 315 generated by the VLM 320 may comprise calls to the VQA module 310 in a specific order.

In some examples, the execution order of the processing submodules in the generated processing flow F 315 may be based at least on the traffic image 105, or, based on the traffic image 105, the processing flow F 315 may not execute specific processing submodules in the system 330, thereby being more adapted to the traffic image 105 to efficiently determine at least a portion of the second topological relationship result T2" 335. For example, the traffic image 105 may not comprise intersections, and therefore, the generated processing flow F 315 may not comprise calls to the second VQA module 350.

In some examples, at least a portion of the second topological relationship result T2" 335 may be generated based on the processing flow F 315. For example, the order of the processing submodules in the execution system 330 may be set based on the processing flow F 315 generated by the VLM 320, thereby generating at least a portion of the second topological relationship result T2" 335.

Although the first VQA module 310 and the second VQA module 350 are shown in FIG. 3B, it can be understood that in other embodiments, the system 330 may also comprise more or fewer VQA modules. For example, it may comprise a third VQA module for determining the left-right relationship of lanes, a fourth VQA module for determining whether two lanes are directly connected, etc. The processing flow F 315 may call one or more modules in the system 330 and determine the relationship between two traffic elements based on the results returned by the called modules. The called VQA module may perform VQA on the VLM based on VQA prompts to return VQA results for the system 330 to generate at least a portion of second topological relationship result T2" 335.

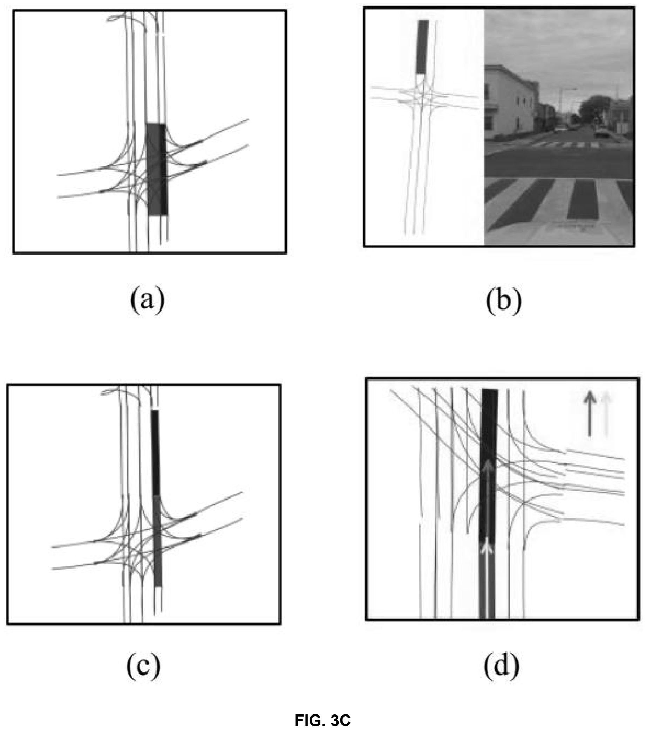

In some examples, VQA prompts may comprise image prompts and text prompts associated with the image prompts. FIG. 3C shows image prompts associated with a VQA module according to different embodiments. In some examples, the image prompts may be at least partially based on the traffic image 105. For example, the image prompts may be the bird's-eye view and/or perspective view marked with relevant traffic elements described above.

For example, a VQA prompt might comprise the image prompt (a) in FIG. 3C, along with the following text prompt: "Explanation: In the provided bird's-eye view (BEV), the black lines in the photograph are lane boundaries used to divide the lanes. The highlighted color blocks are different lane segments. The colors of the color blocks are green and blue.
Question: Are you an expert in determining the positional relationship of lane segments in the image? Is the green segment to the left or right of the blue segment? Please answer in a short sentence." It can be understood that the light-colored lane segment on the left and the dark-colored lane segment on the right shown in the image prompt (a) in FIG. 3C correspond to the green and blue lane segments in the aforementioned text prompt, respectively.
In this example, the VQA model (e.g., a third VQA module used to determine the left-right relationship of lanes) may output: "The green segment is to the left of the blue segment."

For example, a VQA prompt might comprise the image prompt (b) in FIG. 3C, along with the following text prompt: "Explanation: The provided photograph comprises two images, the left being a bird's-eye view (BEV) and the right a front perspective view (PV). Typically, a lane segment is considered not to be in an intersection when it is located in front of or behind the intersection.
Question: You are an expert in determining lane segment location information. Please determine whether the green segment is in the intersection area. Please answer with a short sentence beginning with 'Yes' or 'No'." It can be understood that the light-colored lane segment shown in the image prompt (b) in FIG. 3C corresponds to the green lane segment in the aforementioned text prompt.
In this example, the VQA model (e.g., a second VQA module 350 used to determine whether a lane is in the intersection area) may output: "No, the green segment is not in the intersection area."

For example, a VQA prompt might comprise the image prompt (c) in FIG. 3C, along with the following text prompt: "Explanation: In the provided bird's-eye view (BEV), the black lines in the photograph are lane boundaries. The highlighted color blocks are different lane segments. Only two lane segments that are end-to-end adjacent within the same lane are considered directly connected.
Question: You are an expert in determining lane segment adjacency. Please determine whether the green block is directly connected to the blue block. Please answer with a short sentence beginning with 'Yes' or 'No'." It can be understood that the upper dark lane segment and the lower light lane segment shown in the image prompt (c) in FIG. 3C correspond to the blue and green lane segments in the aforementioned text prompt, respectively.
In this example, the VQA model (e.g., the fourth VQA module used to determine whether two lanes are directly connected) may output: "Yes, the green block is directly connected to the blue block."

For example, a VQA prompt might comprise the image prompt (d) in FIG. 3C, along with the following text prompt: "Explanation: In the provided bird's-eye view (BEV), green and blue lane segments are highlighted. Arrows indicate lane directions. Generally, or when the situation is confusing, two directions with a deviation of less than 45 degrees are considered compatible. Question: You are an expert in determining the directional relationship of lane segments. Please determine whether the directions of the two arrows match. Please answer with a short sentence beginning with 'Yes' or 'No'." It can be understood that the upper dark lane segment and the lower light lane segment shown in the image prompt (d) in FIG. 3C correspond to the blue and green lane segments in the aforementioned text prompt, respectively.
In this example, the VQA model (e.g., the VQA module used to determine whether the directions of two lanes match) may output: "Yes, the directions of the two arrows match."

In some examples, the VLM 320 used to generate the process flow F 315 may be the same as or a different VLM from the VLM 210 described with respect to FIG. 2. In some examples, the VLM 320 may comprise a plurality of VLMs, including the VLM used to generate the process flow F 315 and the VLM used for VQA modules 310, 350, etc. In some examples, the VLM used to generate the process flow F 315 and the VLM used for VQA modules 310, 350, etc. may be the same VLM.

In some examples, the VLM 320 may be trained (or fine-tuned) to generate the processing flow F 315 based at least on the traffic image 105 and the first prompt P 305. For example, the training data may comprise processing flows of the traffic image, the first prompt, and the markers (i.e., processing flows as ground truth), and during training, the VLM 320 may determine a predictive processing flow for generating topological relationship results for the traffic image based on the traffic image and the first prompt, and may update the learnable parameters of the VLM 320 at least partially based on the predictive processing flow and the marker processing flow.

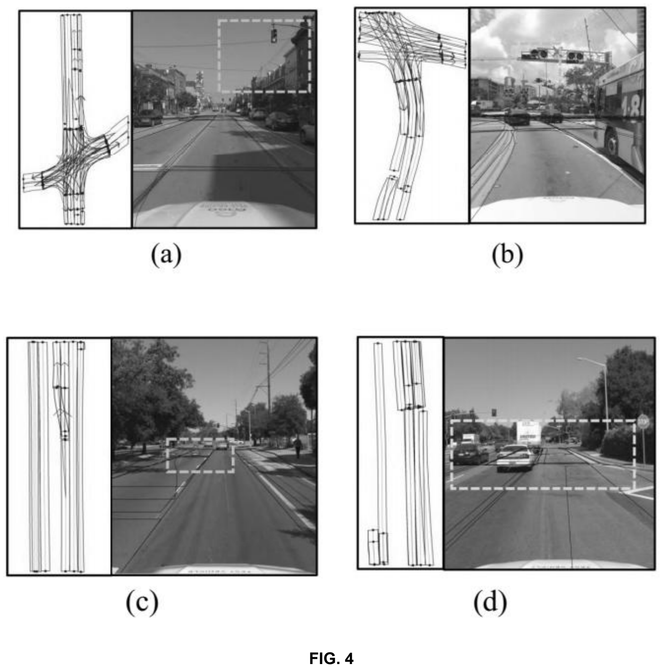

FIG. 4 are schematic diagrams representing lane segment-traffic sign relationships according to different embodiments. In FIG. 4, the blue line represents the detected lane segment, and the green line represents the topological relationship results correctly determined by the fast system 120 or the slow system 130 (e.g., it comprises the topological relationship between the lane segment and traffic signs).

In example (a) of FIG. 4, the vehicle has just passed through the intersection. The fast system 120 or slow system 130 correctly determines the spatial relationship between the traffic sign (e.g., green light) and the lane, and thus generates the correct topological relationship result: the lane ahead of the intersection is not affected by the green light directly above the vehicle, and therefore there is no topological relationship between them. In example (b) of FIG. 4, the fast system 120 or slow system 130 correctly determines that the left-turn signal corresponds only to the leftmost lane segment (e.g., only the leftmost lane segment is affected by the left-turn signal). In example (c) of FIG. 4, the lane surface is marked with a straight-ahead sign, so the sign corresponds only to its own lane segment and adjacent lane segments, and not to other parallel lanes. The fast system 120 or slow system 130 correctly determines the aforementioned correspondence between the sign and the lane segment. In example (d) of FIG. 4, the vehicle is in a one-way right-turn lane, and either the fast system 120 or the slow system 130 may correctly determine that the green light used to control straight-through traffic on both sides does not affect the vehicle's lane.

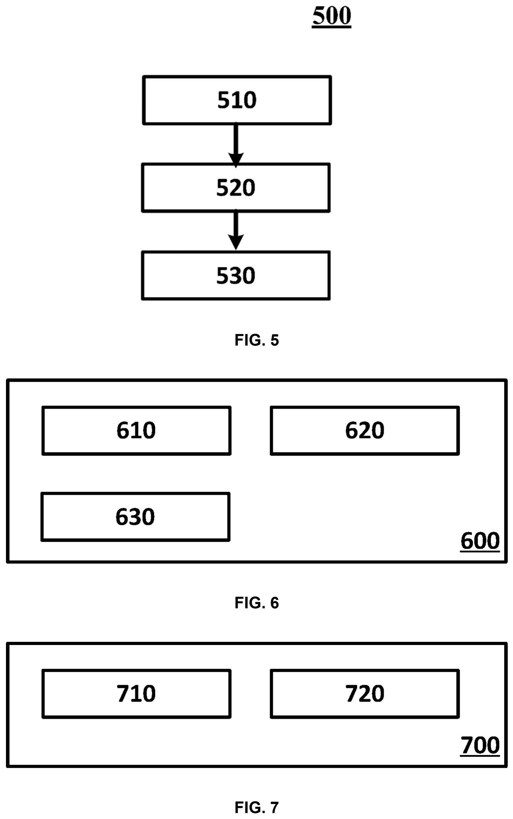

FIG. 5 is a flowchart of a method for determining traffic topological relationships according to one embodiment.

At step 510, a plurality of traffic elements are detected based on the traffic image.

At step 520, a first topological relationship result is determined by the fast system based on a first set of traffic elements among the detected plurality of traffic elements, wherein the first topological relationship result represents the topological relationship between the first set of traffic elements. For example, in the first to third embodiments described above in conjunction with FIG. 1, the first set of traffic elements in step 520 is the set of traffic elements processed by the fast system 120 (i.e., the first set of traffic elements S1 115 or a portion thereof).

At step 530, the slow system determines a second topological relationship result based on a second set of traffic elements among the detected plurality of traffic elements, wherein the second topological relationship result represents the topological relationship between the second set of traffic elements, and the combination of the first and second topological relationship results represents the traffic topological relationship between the plurality of traffic elements. For example, in the first to third embodiments described above in conjunction with FIG. 1, the second set of traffic elements in step 530 is the set of traffic elements processed by the slow system 130 (i.e., the second set of traffic elements S2 135 (which may be empty or non-existent) and a portion of traffic elements that may be processed by the slow system 130 triggered by the fast system 140).

According to one embodiment, the detected plurality of traffic elements comprise at least one type of first-type traffic element and second-type traffic element. According to one embodiment, the first-type traffic element comprises lane segments, and the second-type traffic element comprises traffic signs.

According to one embodiment, the fast system is implemented using the traffic topology identification code, and the slow system is implemented using a visual question answering (VQA) task based on a first visual language model (VLM). Here, the first VLM is not limited to one VLM, but can be one or more first VLMs.

According to one embodiment, the traffic topology identification code is pre-generated via a second VLM based on visual prompts and text prompts, wherein the visual prompts comprise images associated with the few-sample example, and the text prompts comprise data associated with the few-sample example. According to one embodiment, the text prompts further comprise application programming interface (API) prompts and/or professional rule prompts. According to one embodiment, the traffic topology identification code is updated via the second VLM.

According to one embodiment, the first set of traffic elements comprises a plurality of first-type traffic elements, and the first topological relationship result comprises a first relationship among the plurality of first-type traffic elements; or, the first set of traffic elements comprises a plurality of first-type traffic elements and at least one second-type traffic element, and the first topological relationship result comprises: a first relationship among the plurality of first-type traffic elements, and a second relationship between at least a portion of the plurality of first-type traffic elements and the at least one second-type traffic element.

According to one example, it further comprises: determining the second topological relationship result by the slow system in response to the occurrence of at least one of the following: the fast system throwing an exception, the traffic topology identification code calling a visual question answering (VQA) application programming interface (API), and the plurality of traffic elements comprising at least one second-type traffic element.

According to one embodiment, the second set of traffic elements comprises at least one first-type traffic element and at least one second-type traffic element, and the second topological relationship result comprises a second relationship between the at least one first-type traffic element and the at least one second-type traffic element; or, the second set of traffic elements comprises a plurality of first-type traffic elements and at least one second-type traffic element, and the second topological relationship result comprises a first relationship between at least a portion of the plurality of first-type traffic elements and a second relationship between at least a portion of the plurality of first-type traffic elements and the at least one second-type traffic element; or, the second set of traffic elements comprises a plurality of first-type traffic elements, and the second topological relationship result comprises a first relationship between the plurality of first-type traffic elements.

According to one embodiment, the first relationship represents the drivability relationship between first-type traffic elements, and the second relationship represents the corresponding relationship between first-type traffic elements and second-type traffic elements.

According to one embodiment, step 530 further comprises: determining at least a portion of the second topological relationship result using a visual question answering (VQA) module in the slow system; and/or determining at least a portion of the second topological relationship result using the first VLM based on the traffic image and the first prompt through reasoning based on the first prompt. In one example, generating the at least a portion of the second topological relationship result using the first VLM based on the traffic image and the first prompt through reasoning based on the first prompt further comprises: generating a processing flow for generating the at least a portion of the second topological relationship result based on the traffic image and the first prompt through reasoning based on the first prompt; and generating the at least a portion of the second topological relationship result based on the processing flow. In one embodiment, the processing flow comprises performing visual question answering (VQA), and generating the at least a portion of the second topological relationship result based on the processing flow further comprises: performing VQA on the traffic image using the first VLM based on a VQA prompt to generate the at least a portion of the second topological relationship result, wherein the VQA prompt comprises an image prompt and a text prompt associated with the image prompt.

According to one embodiment, the processing flow comprises processing of at least one of a plurality of predefined processing submodules, executed in a specific order.

FIG. 6 is a block diagram of an apparatus 600 for determining traffic topological relationships according to one embodiment.

The apparatus 600 comprises: a detection module 610, a fast system 620, and a slow system 630. The detection module 110 detects a plurality of traffic elements based on a traffic image. A first topological relationship result is determined by the fast system 620 based on a first set of traffic elements among the detected plurality of traffic elements, wherein the first topological relationship result represents the topological relationship between the first set of traffic elements. The slow system 630 determines a second topological relationship result based on a second set of traffic elements among the detected plurality of traffic elements, wherein the second topological relationship result represents the topological relationship between the second set of traffic elements, and the combination of the first and second topological relationship results represents the traffic topological relationship between the plurality of traffic elements.

According to one embodiment, the detected plurality of traffic elements comprise at least one type of first-type traffic element and second-type traffic element. According to one embodiment, the first-type traffic element comprises lane segments, and the second-type traffic element comprises traffic signs.

According to one embodiment, the fast system 620 is implemented using the traffic topology identification code, and the slow system is implemented using a visual question answering (VQA) task based on a first visual language model (VLM).

According to one embodiment, the traffic topology identification code is pre-generated via a second VLM based on visual prompts and text prompts, wherein the visual prompts comprise images associated with the few-sample example, and the text prompts comprise data associated with the few-sample example. According to one embodiment, the text prompts further comprise application programming interface (API) prompts and/or professional rule prompts. According to one embodiment, the traffic topology identification code is updated via the second VLM.

According to one embodiment, the first set of traffic elements comprises a plurality of first-type traffic elements, and the first topological relationship result comprises a first relationship among the plurality of first-type traffic elements; or, the first set of traffic elements comprises a plurality of first-type traffic elements and at least one second-type traffic element, and the first topological relationship result comprises: a first relationship among the plurality of first-type traffic elements, and a second relationship between at least a portion of the plurality of first-type traffic elements and the at least one second-type traffic element.

According to one embodiment, the slow system 630 further determines the second topological relationship result in response to the occurrence of at least one of the following: the fast system throwing an exception, the traffic topology identification code calling a visual question answering (VQA) application programming interface (API), and the plurality of traffic elements comprising at least one second-type traffic element.

According to one embodiment, the second set of traffic elements comprises at least one first-type traffic element and at least one second-type traffic element, and the second topological relationship result comprises a second relationship between the at least one first-type traffic element and the at least one second-type traffic element; or, the second set of traffic elements comprises a plurality of first-type traffic elements and at least one second-type traffic element, and the second topological relationship result comprises a first relationship between at least a portion of the plurality of first-type traffic elements and a second relationship between at least a portion of the plurality of first-type traffic elements and the at least one second-type traffic element; or, the second set of traffic elements comprises a plurality of first-type traffic elements, and the second topological relationship result comprises a first relationship between the plurality of first-type traffic elements.

According to one embodiment, the first relationship represents the drivability relationship between first-type traffic elements, and the second relationship represents the corresponding relationship between first-type traffic elements and second-type traffic elements.

According to one embodiment, the slow system 630 further determines the second topological relationship result based on a second set of traffic elements among the detected plurality of traffic elements by performing the following operations: determining at least a portion of the second topological relationship result using a visual question answering (VQA) module in the slow system; and/or determining at least a portion of the second topological relationship result using the first VLM based on the traffic image and the first prompt through reasoning based on the first prompt. In one embodiment, the slow system 630 further generates the at least a portion of the second topological relationship result using the first VLM based on the traffic image and the first prompt, through reasoning based on the first prompt by performing the following operations: generating a processing flow for generating the at least a portion of the second topological relationship result based on the traffic image and the first prompt through reasoning based on the first prompt; and generating the at least a portion of the second topological relationship result based on the processing flow. In one embodiment, the processing flow comprises performing visual question answering (VQA), and the slow system 630 further generates the at least a portion of the second topological relationship result based on the processing flow by performing the following operations: performing VQA on the traffic image using the first VLM based on a VQA prompt to generate the at least a portion of the second topological relationship result, wherein the VQA prompt comprises an image prompt and a text prompt associated with the image prompt.

According to one embodiment, the processing flow comprises at least one of a plurality of predefined processing submodules, executed in a specific order.

FIG. 7 is a block diagram of a processing apparatus 700 according to one embodiment.

The processing apparatus or processing system 700 comprises one or more control units or processing units 710 that execute one or more machine-readable instructions stored or encoded in a machine-readable storage medium (i.e., memory 720). In one embodiment, the processing unit 710, when executing the program instructions, is configured to perform various operations and functions described above in connection with FIGS. 1-6.

Although not shown in FIGS. 1 through 3B, those skilled in the art will understand that apparatuses 100, 200, 300A or 300B may also comprise various other components, such as various communication modules, bus modules, and possibly user interface modules.

According to one embodiment, a program product, such as a non-transitory machine-readable medium, is provided. The non-transitory machine-readable medium may have instructions that, when executed by the processing unit 710, are capable of performing various operations and functions described above in connection with FIG. 1 to FIG. 6 in various embodiments of the present application.

According to one embodiment, a computer program product is provided. The computer program product comprises computer-executable instructions that, when executed by the processing unit 710, are capable of performing various operations and functions described above in connection with FIGS. 1 to 6 in various embodiments of the present application.

Exemplary examples are described above with reference to the specific examples described in the accompanying drawings, but do not represent all examples that may be implemented or fall within the scope of protection of the Claims. Throughout the Description, the term "example" means "serving as an example, instance, or illustration" and does not imply "preferred" or "advantageous" over other embodiments. Specific embodiments comprise specific details to facilitate understanding of the described technology. However, these technologies may be implemented without these specific details. In some instances, to avoid causing difficulties in understanding the concepts of the described examples, known structures and apparatuses are shown in block diagram form.

The aforementioned description of the present application is provided to allow any person of ordinary skill in the art to implement or use the present application. Various modifications to the present application will be apparent to those of ordinary skill in the art, and the general principles defined herein may be applied to other variations without departing from the scope of protection of the present application. Therefore, the present application is not limited to the exemplary examples and designs described herein but is consistent with the broadest scope defined by the principles and novel features disclosed herein.

## Claims

1. A method for determining traffic topological relationships, comprising:
detecting a plurality of traffic elements based on a traffic image;
determining a first topological relationship result by a fast system based on a first set of traffic elements among the detected plurality of traffic elements, wherein the first topological relationship result represents a topological relationship between the first set of traffic elements; and
determining a second topological relationship result by a slow system based on a second set of traffic elements among the detected plurality of traffic elements, wherein the second topological relationship result represents a topological relationship between the second set of traffic elements, and wherein a combination of the first topological relationship result and the second topological relationship result represents a traffic topological relationship between the plurality of traffic elements.

2. The method according to claim 1, wherein the detected plurality of traffic elements comprises at least one type of first-type traffic element and second-type traffic element.

3. The method according to claim 2, wherein the first-type traffic element comprises a lane segment, and the second-type traffic element comprises a traffic sign.

4. The method according to claim 1, wherein the fast system is implemented using a traffic topology identification code, and the slow system is implemented using a visual question answering (VQA) task based on a first visual language model (VLM).

5. The method according to claim 4, wherein the traffic topology identification code is pre-generated via a second VLM based on a visual prompt and a text prompt, and wherein the visual prompt comprises an image associated with a few-sample example, and the text prompt comprises data associated with the few-sample example.

6. The method according to claim 5, wherein the text prompt further comprises an application programming interface (API) prompt and/or a professional rule prompt.

7. The method according to claim 5 or 6, wherein the traffic topology identification code is updated via the second VLM based on updated few-sample example.

8. The method according to claim 1, wherein the first set of traffic elements comprises a plurality of first-type traffic elements, and the first topological relationship result comprises a first relationship among the plurality of first-type traffic elements; or
wherein the first set of traffic elements comprises a plurality of first-type traffic elements and at least one second-type traffic element, and the first topological relationship result comprises: a first relationship among the plurality of first-type traffic elements, and a second relationship between at least a portion of the plurality of first-type traffic elements and the at least one second-type traffic element.

9. The method according to claim 1, further comprising:
determining the second topological relationship result by the slow system in response to the occurrence of at least one of the following: the fast system throwing an exception, the traffic topology identification code calling a visual question answering (VQA) application programming interface (API), and the plurality of traffic elements comprising traffic elements having specific attribute indicators.

10. The method according to claim 1, wherein the second set of traffic elements comprises at least one first-type traffic element and at least one second-type traffic element, and the second topological relationship result comprises a second relationship between the at least one first-type traffic element and the at least one second-type traffic element; or
wherein, the second set of traffic elements comprises a plurality of first-type traffic elements and at least one second-type traffic element, and the second topological relationship result comprises a first relationship between at least a portion of the plurality of first-type traffic elements and a second relationship between at least a portion of the plurality of first-type traffic elements and the at least one second-type traffic element; or
wherein, the second set of traffic elements comprises a plurality of first-type traffic elements, and the second topological relationship result comprises a first relationship between the plurality of first-type traffic elements.

11. The method according to claim 8 or 10, wherein the first relationship represents a drivability relationship between first-type traffic elements, and the second relationship represents a corresponding relationship between first-type traffic elements and second-type traffic elements.

12. The method according to claim 1, wherein determining the second topological relationship result by a slow system based on a second set of traffic elements among a plurality of detected traffic elements comprises:
determining at least a portion of the second topological relationship result by a visual question answering (VQA) module in the slow system; and/or
generating at least a portion of the second topological relationship result by reasoning based on the first prompt using a first VLM, based on the traffic image and a first prompt.

13. The method according to claim 12, wherein generating the at least a portion of second topological relationship result using the first VLM through reasoning based on the first prompt, based on the traffic image and the first prompt, comprises:
determining a processing flow for generating the at least a portion of second topological relationship result using reasoning based on the first prompt, based on the traffic image and the first prompt; and
generating the at least a portion of second topological relationship result based on the processing flow.

14. The method according to claim 13, wherein the processing flow comprises performing visual question answering (VQA), and generating the at least a portion of second topological relationship result based on the processing flow comprises:
performing VQA on the traffic image using the first VLM based on a VQA prompt to generate the at least a portion of the second topological relationship result, wherein the VQA prompt comprises an image prompt and a text prompt associated with the image prompt.

15. The method according to claim 13, wherein the processing flow comprises processing of at least one processing submodule of a plurality of predefined processing submodules executed in a specific order.

16. An apparatus for determining traffic topological relationships, comprising:
a detection module that detects a plurality of traffic elements based on a traffic image;
a fast system that determines a first topological relationship result based on a first set of traffic elements among the detected plurality of traffic elements, wherein the first topological relationship result represents a topological relationship between the first set of traffic elements; and
a slow system that determines a second topological relationship result based on a second set of traffic elements among the detected plurality of traffic elements, wherein the second topological relationship result represents a topological relationship between the second set of traffic elements, and wherein a combination of the first topological relationship result and the second topological relationship result represents a traffic topological relationship between the plurality of traffic elements.

17. An apparatus for determining traffic topological relationships, comprising:
one or more processors; and
one or more memories, the memories having computer-executable instructions stored thereon, and the instructions, when run by the one or more processors, perform any one of operations of claims 1 to 15.

18. A machine-readable storage medium having executable instructions stored thereon, the instructions, when executed, causing one or more processors to perform the method according to any one of claims 1 to 15.

19. A computer program product comprising executable instructions that, when executed, cause one or more processors to perform the method according to any one of claims 1 to 15.
